# EUROPÄISCHE PATENTANMELDUNG

(11) **EP 1 622 022 A1**
(43) Veröffentlichungstag der Anmeldung: **01.02.2006**
(21) Anmeldenummer: 04017360.1
(22) Anmeldetag: 22.07.2004
(51) Int. Cl.: G06F 11/36

(54) **Automatische Erzeugung von Testfällen**

(71) Anmelder: SIEMENS AKTIENGESELLSCHAFT, 80333 München (DE)
(72) Erfinder: Augustin, Martin Dr., 76227 Karlsruhe (DE); Denzlein, Michael, 91056 Erlangen (DE); Feld, Frank, 91227 Leinburg (DE); Glas, Vitus, 90768 Fürth (DE); Helm, Mathias, 91056 Erlangen (DE); Höfler, Werner, 90542 Eckental (DE); Kittel, Stephan, 91056 Erlangen (DE); Pigan, Raimond, 91052 Erlangen (DE)

(57) **Zusammenfassung**

Die Erfindung betrifft eine Vorrichtung und ein Verfahren, mittels dessen die automatische Erzeugung einer optimalen Anzahl von Testfällen für das Testen einer Softwarefunktion ermöglicht wird. Im Umfeld des Unit-Tests bzw. des Modultests wird eine Infrastruktur bereitgestellt, die die Erzeugung und Abarbeitung von Testfällen in hohem Maße automatisiert, so dass Eingaben eines Entwicklers nur noch in geringem Umfang erforderlich sind. Einmal erfasste Testfälle werden gespeichert und können nach einer Code-Änderung beliebig oft wiederholt werden.

## Beschreibung

Die Erfindung betrifft eine Vorrichtung und ein Verfahren zur automatischen Erzeugung und/oder Abarbeitung von Testfällen für Softwarefunktionen.

In den verschiedenen Phasen der Software-Entwicklung wird die Software auf Fehlerfreiheit getestet. Die unterschiedlichen Test-Phasen nach Entwicklungsfortschritt sind:
Unit - Test bzw. Modultest: Test einer einzelnen Funktion unmittelbar nach der Implementierung durch den Entwickler Integrationstest: Testen des Zusammenspiels einzelner Software-Module durch Tester
System-Test: Test des fertigen Software-Produktes durch Tester.

Seit Jahren wird propagiert, den Modultest möglichst intensiv durchzuführen, um Fehler bereits in frühen Entwicklungsphasen zu finden. Darin wird allgemein ein erhebliches Potenzial zur Steigerung der Software-Qualität gesehen. Die Einführung des Modultests ist bisher allerdings nur zum Teil und in sehr beschränktem Umfang gelungen. Die Gründe dafür sind vielfältig. Zum einen liegt dies an der Komplexität bestehender Tools, der fehlenden Modultestkultur in der Entwicklung und der mangelnden Kenntnis hinsichtlich existierender Methoden und Werkzeuge.

Die Unterstützung des Software-Entwicklers durch entsprechende Werkzeuge ist unzureichend. Um z.B. eine Methode bzw. eine Funktion mit unterschiedlichen Eingabewerten zu testen, muss der Entwickler in seiner Entwicklungsumgebung (Debugger) die Werte von Hand vorbelegen und dann jede Codezeile einzeln durchlaufen. Bei vielen Eingabeparametern bzw. potentiell vielen verschiedenen Werten ist dies eine zeitaufwändige und monotone Tätigkeit.

Nach einer Änderung des Codes ist außerdem die gesamte Prozedur zu wiederholen.

Die Möglichkeit, Fehler schon in einer frühen Projektphase zu finden wird heute unzureichend genutzt. Der aufwändige Test wird nicht konsequent genug durchgeführt. Auch dort, wo Werkzeuge eingesetzt werden, ist noch viel "Handarbeit" des Entwicklers erforderlich, z.B. um Test-Code oder entsprechende Test-Scripte zu erzeugen. Auch bei der Abarbeitung der Testfälle sind viele Eingriffe des Entwicklers nötig.

Um entwickelten Code vollständig und möglichst optimal zu testen, ist es notwendig, alle benötigten Testfälle für die jeweilige Funktion zu finden. Wenn man den Gesamtraum der Eingabedaten einer Funktion betrachtet, ist es jedoch unmöglich für jeden im Gesamtraum enthaltenen Punkt einen Testfall zu schreiben. Daher sollen nur die notwendigen Testfälle abgearbeitet werden.

Ein zu diesem Zweck verwendetes Verfahren ist die Äquivalenzklassenanalyse (ÄK-Analyse). Ziel der Äquivalenzklassenmethode ist es, die Menge der benötigten Testfälle durch Klassenbildung einzuschränken. Das Beschränkungskriterium ist dabei die auf Basis der Eingabedaten identische Reaktion der Funktion. Jede Eingangs-Variable stellt eine Dimension des Eingangsraumes dar. Der Zahlenbereich jeder Eingangsdimension unterteilt sich dabei in Bereiche, so genannte Äquivalenzbereiche, deren Mitglieder innerhalb der Funktion die gleiche Reaktion hervorrufen. Dies spiegelt sich im identischen Pfad durch die Funktion für all diese Werte wieder.

In der Regel ist es ausreichend, einen Vertreter aus diesem Wertebereich herauszunehmen, um die korrekte Funktion für alle Mitglieder der Klasse zu zeigen. Eine Äquivalenzklasse ist also dadurch gekennzeichnet, dass sich das Programm bei der Verarbeitung eines Vertreters aus dieser Klasse genauso verhält wie bei allen anderen Werten aus dieser Klasse.

Die ÄK-Analyse geht dabei von einer Black-Box Sicht aus, d.h. sie kennt die Implementierung bzw. die innere Struktur einer Funktion nicht. Aus diesem Grund muss jede Variable als von den anderen Variablen unabhängige Eingangsdimension aufgefasst werden. Durch diese Unabhängigkeits-Annahme müssen die Äquivalenzbereiche miteinander multipliziert werden, um sicherzustellen, dass alle Testfälle generiert werden. Es ist somit nicht möglich, die optimale Anzahl von Testfällen mittels der Äquivalenzanalyse zu generieren.

Die Aufgabe der vorliegenden Erfindung ist daher, eine Vorrichtung und ein Verfahren anzugeben, mittels dessen die automatische Erzeugung einer optimalen Anzahl von Testfällen für das Testen einer Softwarefunktion ermöglicht wird.

Die Aufgabe wird erfindungsgemäß gelöst durch eine Vorrichtung zur automatischen Erzeugung und/oder Abarbeitung von Testfällen für Softwarefunktionen, mit ersten Mitteln zur Ermittlung von Äquivalenzklassen für Eingabeparameter mindestens einer Softwarefunktion, zweiten Mitteln zur Generierung der Anzahl der Testfälle auf Basis der ermittelten Äquivalenzklassen und dritten Mitteln zur Ausführung der Tests für die mindestens eine Softwarefunktion, wobei aus jeder Äquivalenzklasse ein Wert für den Test bestimmt wird.

Die Aufgabe wird weiterhin gelöst durch ein Verfahren zur automatischen Erzeugung und/oder Abarbeitung von Testfällen für Softwarefunktionen, bei dem Äquivalenzklassen für Eingabeparameter mindestens einer Softwarefunktion ermittelt werden, die Anzahl der Testfälle auf Basis der ermittelten Äquivalenzklassen generiert wird und die Tests für die mindestens eine Softwarefunktion ausgeführt werden, wobei aus jeder Äquivalenzklasse ein Wert für den Test bestimmt wird.

Der Erfindung liegt die Erkenntnis zugrunde, dass für den U-nit-Test bzw. den Modultest eine Infrastruktur benötig wird, die die Erzeugung und Abarbeitung von Testfällen in hohem Maße automatisiert, so dass Eingaben eines Entwicklers nur noch in geringem Umfang erforderlich sind. Einmal erfasste Testfälle werden gespeichert und können nach einer Code-Änderung beliebig oft wiederholt werden.

### Automatische Testfallerzeugung:

Für die Eingabeparameter werden durch Analyse des Source-Codes Äquivalenklassen ermittelt. Das sind die Wertebereiche, bei denen jeder Wert aus diesem Bereich ein identisches Verhalten der zu testenden Methode bewirkt.

Die automatische Testfallerzeugung liefert die Äquivalenzklassen für eine Methode und optimiert die daraus resultierenden Testfälle hinsichtlich einer möglichst geringen Anzahl. Hierbei wird die ÄK-Analyse mit der so genannten White Box Sicht verbunden. Durch die strukturelle Analyse des Codes der zu testenden Funktion wird zusätzlich zu den Äquivalenzbereichen einer jeden Eingangs-Dimension die interne Struktur des Codes bestimmt und bei der Generierung der Testfälle berücksichtigt.

Beispielsweise erwartet eine Variable Monat Werte von 1 bis 12 und behandelt jeden gültigen Wert gleich. Sinnvolle Äquivalenzbereiche dieser Variable sind somit -∞ bis 0; 1 bis 12 und 13 bis +∞. Kennt man jedoch die strukturelle Information, dann spielen für den Testfall "Monat<0" oder "Monat>12" alle anderen Eingangsdaten und damit die mit der Variable zu multiplizierende Äquivalenzbereiche keine Rolle mehr. Dies führt zu einer enormen Ersparnis von Testfällen.

Um dies zu erreichen, wird der Code baumartig abgebildet und für jeden Zweig werden alle dort verarbeiteten Variablen bestimmt. Als Ergebnis erhält man einen Baum, in dessen Blättern jeweils eine Liste sämtlicher Bedingungen und Operationen abgelegt ist, die zum Erreichen dieses Blattes benötigt wurden. Diese Liste von Bedingungen und Operationen entspricht damit der Beschreibung der zugehörigen Äquivalenzklasse Durch eine statische Analyse ist es möglich, diese zu bestimmen.

Um die Tests ausführen zu können, wird aus jeder Äquivalenzklasse ein Wert bestimmt, der für den Test herangezogen wird. Um den Test zu verifizieren, werden außerdem die Werte für den Ausgangsraum festgelegt, die bei fehlerfreiem Durchlauf vorliegen müssen.

### Datenerfassung und Ablage:

Die Daten, die nicht automatisch durch Codeanalyse erzeugt werden, können durch eine entsprechende GUI (Bedienoberfläche) ergänzt werden, die in die Vorrichtung bzw. das Entwicklungswerkzeug integriert ist. Hier kann der Entwickler auch Änderungen der automatisch erzeugten Daten vornehmen. Die Daten werden in einer Xml-Datei gespeichert.

### Automatische Testfall-Abarbeitung:

Aus der Xml-Datei wird mit Hilfe eines Programmes automatisch der Test-Code erzeugt, der die Testfälle abarbeitet. Der Test-Code wird übersetzt und ein Test-Assembly wird daraus gebildet. Dies ist ein eigenständiges Programm bzw. eine D11. Der Test kann in verschiedenen Isolationsstufen ausgeführt werden.

Im Rahmen der Erfindung werden die einzelnen Teile automatische Testfallerzeugung, integrierte Benutzeroberfläche in die Entwicklungsumgebung mit Datenablage in Xml und automatische Test-Codeerzeugung daraus kombiniert. Die Teile sind unabhängig von einander und durch genau festgelegte Schnittstellen definiert. So ist jedes Teil austauschbar. Wird z.B. die Programmiersprache geändert, ist nur die Testfallerzeugung anzupassen. Bei Änderung der Entwicklungsumgebung wird nur die Benuzteroberfläche ausgetauscht. Auch für die Testfallabarbeitung können unterschiedliche Werkzeuge verwendet werden.

Als Basis für alle Teile wird die Xml-Struktur festgelegt, die alle erforderlichen Daten beinhaltet.

Somit ergibt sich eine hohe Wiederverwendbarkeit in unterschiedlichen Einsatzfeldern und eine flexible Struktur, die bei Einsatz neuer Entwicklungswerkzeuge leicht angepasst werden kann.

Im Folgenden wird die Erfindung anhand der in den Figure dargestellten Ausführungsbeispiele näher beschrieben und erläutert.

Es zeigen:
- Fig 1: Eine schematische Übersicht über die Vorrichtung zur Erzeugung und Abarbeitung von Testfällen,
- Fig 2: Eine beispielhafte Ausführung mit nicht isolierter Funktion,
- Fig 3: Eine beispielhafte Ausführung mit isolierter Funktion.

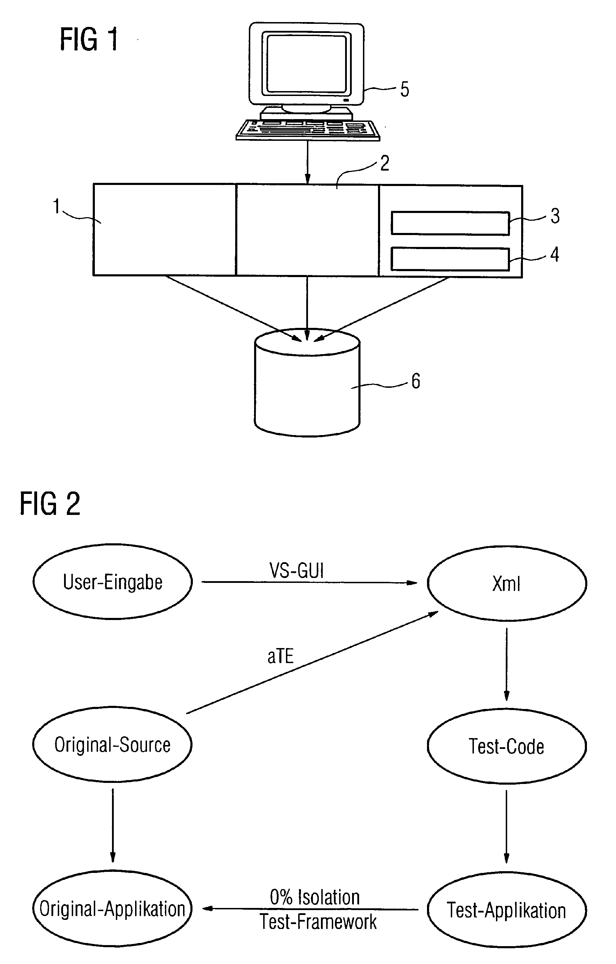

Fig 1 stellt das Gesamtsystem dar, welches sich aus folgenden Komponenten zusammensetzt:

### Äquivalenzklassenermittlung:

Hier wird mittels der ersten Mittel 1 zur Ermittlung der Äquivalenzklassen eine Analyse durchgeführt, deren Ergebnis die Anzahl der möglichen Äquivalenzbereiche ist. Für jeden Äquivalenzbereich wird dann im Weiteren nur ein beispielhafter Testfall durchgeführt.

### Testfallerzeugung:

Hier wird mittels der zweiten Mittel 2 zur Generierung der Anzahl der Testfälle eine möglichst optimale Anzahl von Testfällen generiert und mit allen Eingabe- und Ausgabegrößen beschrieben. Hierzu wird die Äquivalenzklassenanalyse auf eine White-Box sicht übertragen. Die Struktur der zu testenden Funktion ist bekannt, d.h. dass quasi die Semantik einzelner zu testender Äquivalenzbereiche dahingehend bekannt ist, ob sie überhaupt zu einer sinnvollen Eingabe führen; beispielsweise ist die Eingabe von negativen Werten für die Variable "Monat" nicht relevant, da sie keine sinnvolle Eingabe darstellen.

Theoretisch sind alle Mächtigkeiten der Äquivalenzbereiche der Eingangsdimensionen zu multiplizieren. Diese Multiplikation kann man als Baum darstellen:

### Beispiel:

Eine Funktion mit nur zwei Parametern: Shell (Boolean) und Height (Integer). Diese liefern beispielhaft folgenden nicht-optimierten ÄK-Baum:

| Shell = True | |
|---|---|
| Height = Int_Min ... -1 | ← ÄK 1 |
| Height = 0 | ← ÄK 2 |
| Height = 1 ... 5 | ← ÄK 3 |
| Height = 6 ... Int_Max | ← ÄK 4 |

| Shell = False | |
|---|---|
| Height = Int_Min ... -1 | ← ÄK 5 |
| Height = 0 | ← ÄK 6 |
| Height = 1 ... 5 | ← ÄK 7 |
| Height = 6 ... Int_Max | ← ÄK 8 |

Dabei ist jedes "Blatt" dieses Baums als eine eigenständige Äquivalenzklasse aufzufassen!
Wenn man den Code betrachtet erkennt man z.B. das die Funktion sofort beendet wird, wenn Shell = False ist. Das bedeutet, das das Ergebnis der Funktion im Zweig Shell = False, nicht von Height abhängt.
Somit braucht man für den Variablenwert Shell = False den gesamten Restbaum nicht betrachten. Diesen kann man ausblenden, so daß nur eine ÄKlasse übrig bleibt.

### Beispiel:

Wenn Shell==False ist, wird die Funktion sofort beendet

| Shell = True | |
|---|---|
| Height = Int_Min ... -1 | ← ÄK 1 |
| Height = 0 | ← ÄK 2 |
| Height = 1 ... 5 | ← ÄK 3 |
| Height = 6 ... Int_Max | ← ÄK 4 |
| Shell = False | ← ÄK 5 |

Damit hat sich die Anzahl der Testfälle von 8 auf 5 reduziert, was in diesem Beispiel einer Verbesserung von 38% entspricht.

### Testfallabarbeitung:

Auf der Basis der im Rahmen der Testfallerzeugung gewonnenen Daten erfolgt der Test der entsprechenden Code-Teile der zu testenden Funktion durch die dritten Mittel 3 zur Ausführung und die Verifizierung der Ergebnisse durch die vierten Mittel 4 zur Verifizierung.

### Visualisierung (User Interface):

Mittels der Eingabevorrichtung 5 kann ein Benutzer des Systems weitere Eingaben durchführen und die generierten Testfälle modifizieren bzw. auch weitere Testfälle hinzufügen. Über die Eingabevorrichtung 5 können auch die für die Optimierung durch die zweiten Mittel 2 zur Generierung der Anzahl der Testfälle relevanten Informationen eingegeben werden. Gleichzeitig werden die für den Benutzer relevanten Informationen beispielsweise auf einem Bildschirm visualisiert.

### Datenablage:

Die in der Testfallerzeugung und -abarbeitung erzeugten Daten können persistent in den Speichermitteln 6 abgelegt werden.

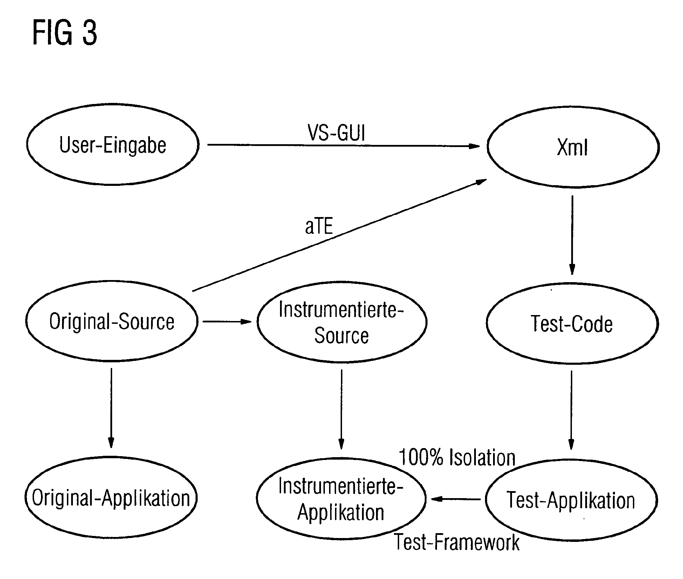

Figuren 2 und 3 zeigen Ausführungsbeispiele mit unterschiedlichen Isolationsgraden der zu testenden Funktion. Der Isolationsgrad bezieht sich nur auf die betrachtete Funktion und ist der Quotient aus Außenwirkungen (Lesen, Schreiben, Call) mit Stub und der Summe aller Außenwirkungen.

### Außenwirkungen (mit Stub) Σ Außenwirkungen

### Grundsätzlich gibt es hier zwei Extrema:

Vollständige Isolation: Die Funktion hat keinerlei Verbindung zur Außenwelt, sie ruft nur Stubs auf und bekommt Daten nur von dem Testframework.
Null Isolation: Die Testroutine ist Teil der gesamten Applikation und nutzt sie als Framework. Es werden keinerlei Stubs verwendet. Die Testdaten kommen aus den Testfallvorgaben, müssen mit dem gesamten System aber synchronisiert sein.

Beide Varianten sind nur extreme Ausprägungen einer fließenden Grenze der Isolation. Idealerweise hat der Entwickler die volle und einfache Kontrolle über den Grad an Isolation für den jeweiligen Test. Hinzu kommt, dass verschiedene Testphasen auch einen unterschiedlichen Grad an Isolation benötigen. So kann der Modultest gut mit voller Isolation zurechtkommen, während der Integrationstest möglichst keine Isolation wünscht (außer für die noch nicht vorhandenen Teile).

In Fig. 2 ist ein beispielhafter Testablauf für eine nicht isolierte Funktion dargestellt. 0%-Isolation heißt dabei, die zu testende Methode bzw. Funktion bleibt unverändert und wird im Kontext der zugehörigen Applikation aufgerufen. Alle Funktionsaufrufe innerhalb der Methode werden real ausgeführt, ebenso alle Zugriffe auf globale Variablen. Es muss sicher gestellt sein, dass alle Voraussetzungen gegeben sind, um die zu testende Applikation zu starten. In einer Start-Methode wird der Code ausgeführt, der vor dem eigentlichen Test ablaufen muss. Das sind z.B. Initialisierungen oder bestimmte Funktionsaufrufe. Die End-Methode wird nach dem Test aufgerufen und erlaubt das Freigeben der Ressourcen, die bei dem Test benötigt wurden.
Für die Funktion wird mittels der Vorrichtung automatisch eine Menge von Testfällen durch Codeanalyse erzeugt. Über die Eingabevorrichtung 5 kann der Benutzer weitere Eingaben durchführen. Die Daten werden in Xml gespeichert und der Testcode wird erzeugt. Die Funktion bzw. Applikation wird in ihrem normalen Umfled getestet.

In Fig. 3 ist ein beispielhafter Testablauf für eine vollständig isolierte Funktion dargestellt. Im Fall der 100%-Isolation wird die ursprüngliche Methode verändert, so dass alle Funktionsaufrufe und alle Zugriffe auf Daten außerhalb der Methode durch einen Stub ersetzt werden. So ist die Methode völlige unabhängig von ihrem eigentlichen Kontext ausführbar. Für die instrumentierte Methode wird eine eigene ausführbare Einheit erzeugt.

### Es folgt eine beispielhafte Implementierung für eine erfindungsgemäßen Vorrichtung:

Aus dem C#-Sourcecode wird ein Microsoft CodeDom aufgebaut. Dieser wird analysiert und die Testfälle werden erzeugt. Die Daten aus der autoamtischen Testfallermittlung und die Eingaben über die GUI werden in Xml gespeichert:

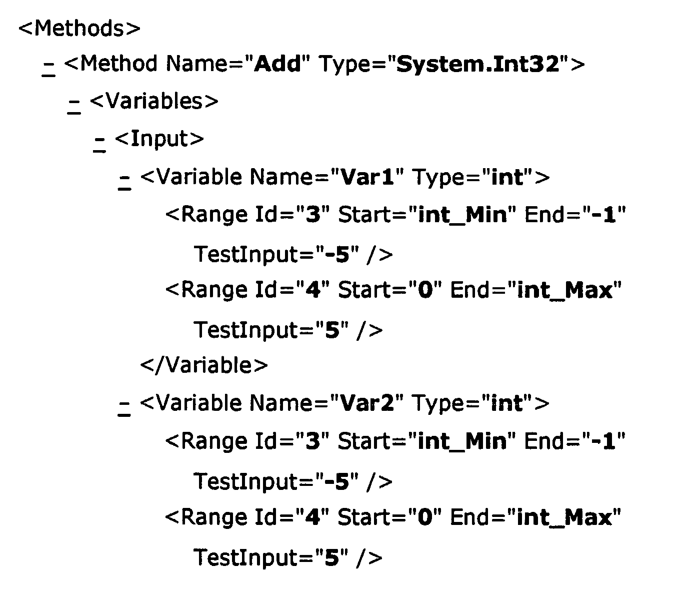

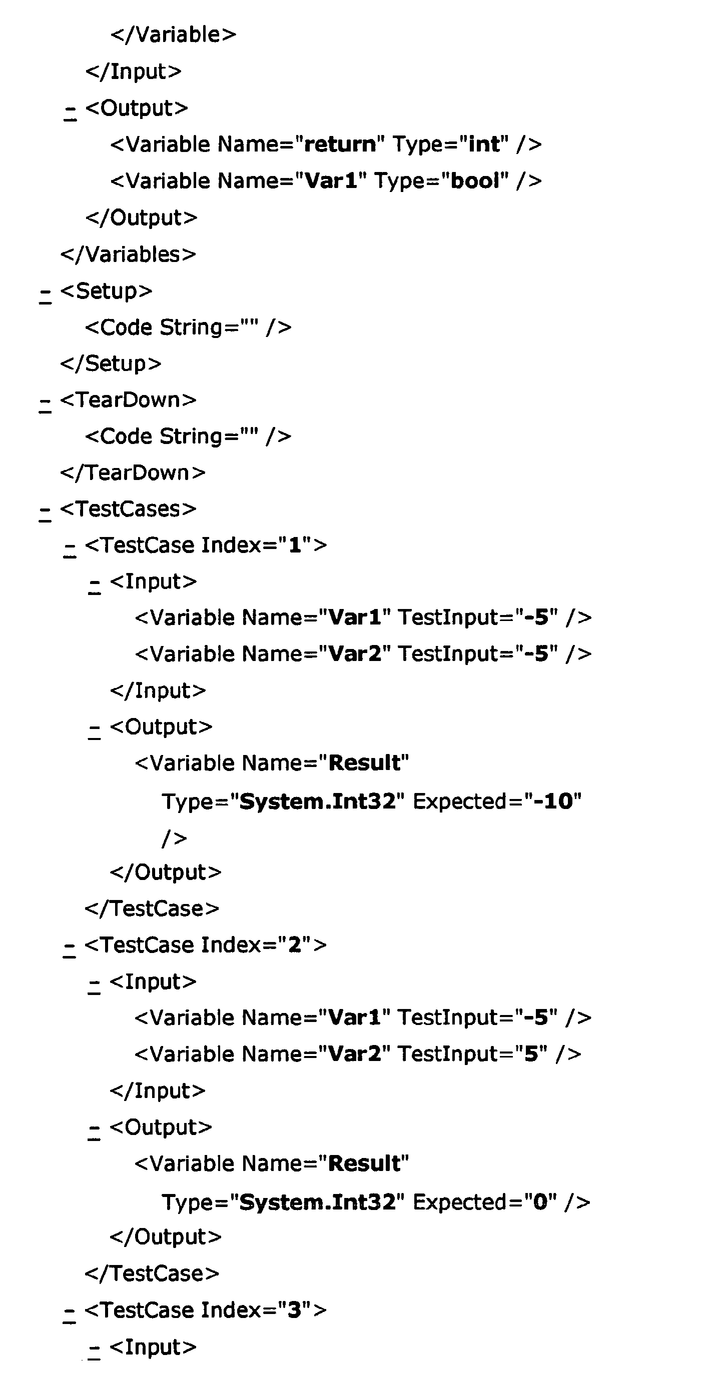

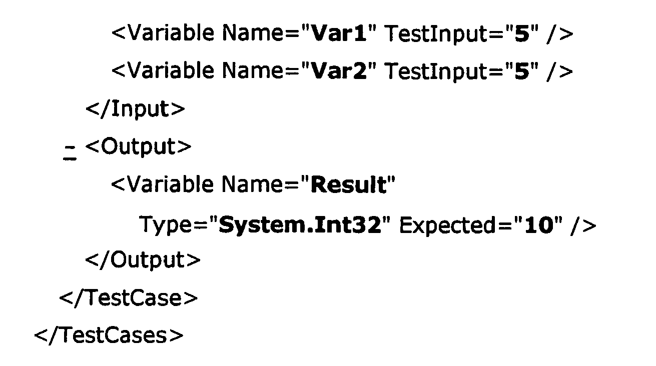

Zur Testausführung wird Nunit eingesetzt, ein Test-Framework für Unit-Testing unter einer Open Source Lizenz http://nunit.sourceforge.net

Aus den Xml-Daten wird ein Microsoft CodeDom erzeugt. Anschließend wird der Test-Code erzeugt, der für Nunit benötigt wird.

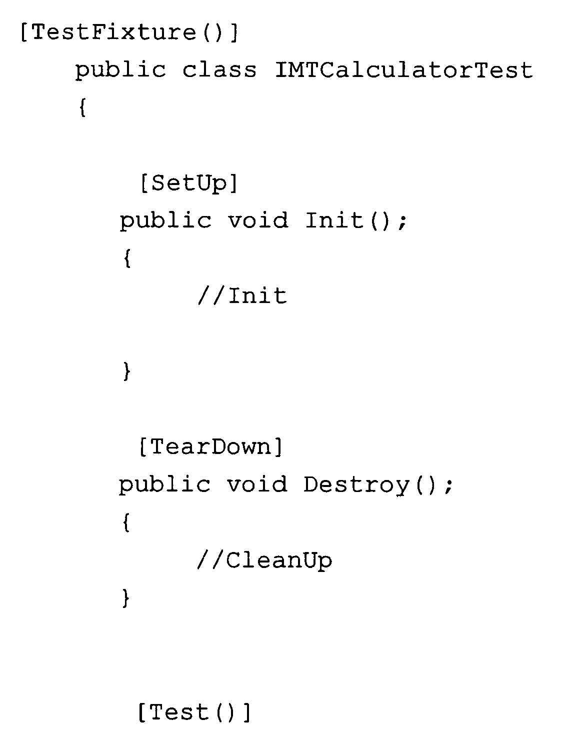

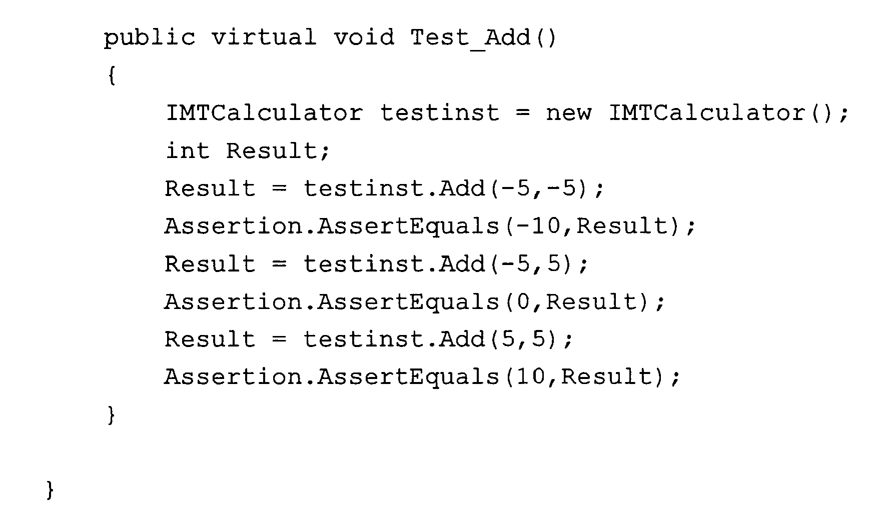

Aus dem Code wird ein Test-Assembly erzeugt. Die Testfälle werden mit Nunit abgearbeitet.

Zusammenfassend betrifft die Erfindung eine Vorrichtung und ein Verfahren, mittels dessen die automatische Erzeugung einer optimalen Anzahl von Testfällen für das Testen einer Softwarefunktion ermöglicht wird. Im Umfeld des Unit-Tests bzw. des Modultests wird eine Infrastruktur bereitgestellt, die die Erzeugung und Abarbeitung von Testfällen in hohem Maße automatisiert, so dass Eingaben eines Entwicklers nur noch in geringem Umfang erforderlich sind. Einmal erfasste Testfälle werden gespeichert und können nach einer Code-Änderung beliebig oft wiederholt werden.

## Patentansprüche

1. Vorrichtung zur automatischen Erzeugung und/oder Abarbeitung von Testfällen für Softwarefunktionen, mit
- ersten Mitteln (1) zur Ermittlung von Äquivalenzklassen für Eingabeparameter mindestens einer Softwarefunktion,
- zweiten Mitteln (2) zur Generierung der Anzahl der Testfälle auf Basis der ermittelten Äquivalenzklassen und
- dritten Mitteln (3) zur Ausführung der Tests für die mindestens eine Softwarefunktion, wobei aus jeder Äquivalenzklasse ein Wert für den Test bestimmt wird.

2. Vorrichtung nach Anspruch 1, mit vierten Mitteln (4) zur Verifizierung durchgeführter Tests, wobei bei fehlerfreiem Testdurchlauf vorzuliegende Ergebnis-Werte festlegbar sind.

3. Vorrichtung nach Anspruch 1 oder 2, wobei die Ermittlung der Äquivalenzklassen auf Basis einer Source-Code Analyse vorgesehen ist.

4. Vorrichtung nach einem der Ansprüche 1 bis 3, mit einer Eingabevorrichtung (5) zur Eingabe von Ergänzungen und/oder Änderungen der für die Durchführung der Tests benötigten Werte.

5. Vorrichtung nach einem der vorhergehenden Ansprüche, wobei eine XML-Datei zur Speicherung der ermittelten Klassen und/oder der bestimmten Werte vorgesehen ist.

6. Vorrichtung nach einem der vorhergehenden Ansprüche, wobei die zweiten Mittel (2) zur Generierung der Anzahl der Testfälle zur Optimierung der Anzahl vorgesehen sind.

7. Vorrichtung nach einem der vorhergehenden Ansprüche, mit einem Programm zur automatischen Erzeugung eines Test-Codes.

8. Vorrichtung nach einem der vorhergehenden Ansprüche, mit Speichermitteln (6) zur Speicherung bereits generierter Testfälle, wobei die gespeicherten Testfälle wieder verwendbar sind.

9. Verfahren zur automatischen Erzeugung und/oder Abarbeitung von Testfällen für Softwarefunktionen, bei dem
- Äquivalenzklassen für Eingabeparameter mindestens einer Softwarefunktion ermittelt werden,
- die Anzahl der Testfälle auf Basis der ermittelten Äquivalenzklassen generiert wird und
- die Tests für die mindestens eine Softwarefunktion ausgeführt werden, wobei aus jeder Äquivalenzklasse ein Wert für den Test bestimmt wird.

10. Verfahren nach Anspruch 9, bei dem durchgeführte Tests verifiziert werden, wobei Ergebnis-Werte für einen fehlerfreien Testdurchlauf festgelegt werden.

11. Verfahren nach Anspruch 9 oder 10, bei dem die Äquivalenzklassen auf Basis einer Source-Code Analyse ermittelt werden.

12. Verfahren nach einem der Ansprüche 9 bis 11, bei dem Ergänzungen und/oder Änderungen der für die Durchführung der Tests benötigten Werte über eine Eingabevorrichtung eingegeben werden.

13. Verfahren nach einem der Ansprüche 9 bis 12, bei dem die ermittelten Klassen und/oder die bestimmten Werte in eine XML-Datei gespeichert werden.

14. Verfahren nach einem der Ansprüche 9 bis 13, bei dem die der Anzahl der Testfälle optimiert wird.

15. Verfahren nach Anspruch 14, bei dem die interne Struktur des Codes der Funktion bestimmt wird und bei der Generierung der Testfälle berücksichtigt wird.

16. Verfahren nach Anspruch 15, bei dem der Code der Funktion baumartig abgebildet wird und bei dem für jeden Zweig des Baumes die dort verarbeiteten Variablen bestimmt werden, wobei die Blätter des Baumes als Ergebnis eine Liste der Operationen und/oder Bedingungen enthalten, die zum Erreichen des Blattes benötigt werden, wobei die Liste der Operationen und/oder Bedingungen eine Beschreibung der zugehörigen Äquivalenzklasse ist.

17. Verfahren nach einem der Ansprüche 9 bis 16, bei dem ein Test-Code automatisch erzeugt wird.

18. Verfahren nach einem der Ansprüche 9 bis 17, bei dem die bereits generierten Testfälle gespeichert werden und wieder verwendbar sind.

19. Verfahren nach einem der Ansprüche 9 bis 18, bei dem die zu testende Funktion unverändert beleibt und im Kontext der zugehörigen Applikation und/oder Umgebung aufgerufen wird.

20. Verfahren nach einem der Ansprüche 9 bis 18, bei dem die zu testende Funktion isoliert getestet wird und bei dem die Aufrufe und/oder Zugriffe auf Daten außerhalb der Funktion durch einen Stub ersetzt werden.
